# EUROPÄISCHE PATENTANMELDUNG

(11) **EP 2 602 285 A2**
(43) Veröffentlichungstag der Anmeldung: **12.06.2013**
(21) Anmeldenummer: 12196371.4
(22) Anmeldetag: 10.12.2012
(51) Int. Cl.: C08J 9/00

(54) **Polystyrol-Hartschaum mit Aluminiumpigmenten, Verfahren zur Herstellung des Polystyrol-Hartschaums und Verwendung desselben**

(30) Priorität: 09.12.2011 DE 102011056228
(71) Anmelder: Eckart GmbH, 91235 Hartenstein (DE); Saint-Gobain Rigips GmbH, 40549 Düsseldorf (DE)
(72) Erfinder: Greb, Marco, 63571 Gelnhausen (DE); Henglein, Frank, 90409 Nürnberg (DE); Wolfrum, Christian, 91052 Erlangen (DE); Grimm, Christian, 33442 Herzebrock-Clarholz (DE); Middendorf, Hans-Dieter, 33415 Verl (DE)
(74) Vertreter: Louis Pöhlau Lohrentz

(57) **Zusammenfassung**

Die Erfindung betrifft Polystyrol-Hartschaum enthaltend Aluminiumpigmente mit einem metallischen Kern, wobei der metallische Kern der Aluminiumpigmente einen elementaren Aluminiumanteil von wenigstens 50 Gew.-%, bezogen auf das Gewicht des metallischen Kerns aufweist, wobei die Aluminiumpigmente in Form von Plättchen, deren d_{50,flake}-Wert zwischen 1 und 25 µm liegt, und in Form von Aluminiumgrieß mit einem mittleren Durchmesser d_{50, Grieß} zwischen 0,5 und 25 µm vorliegen, wobei der Anteil des Aluminiumgrießes an dem Gesamtgewicht der Aluminiumpigmente in einem Bereich von 60 Gew.-% bis 90 Gew.-% und der Anteil der Aluminiumplättchen an dem Gesamtgewicht der Aluminiumpigmente in einem Bereich von 40 Gew.-% bis 10 Gew.-% liegt, und die Aluminiumpigmente als homogene Mischung im Polystyrol-Hartschaum vorliegen. Die Erfindung betrifft ferner ein Verfahren zur Herstellung des Polystyrol-Hartschaumes als auch dessen Verwendung.

## Beschreibung

Die Erfindung betrifft einen Polystyrol-Hartschaum enthaltend Aluminiumpigmente mit einem metallischen Kern, der einen Anteil an elementarem Aluminium von wenigstens 50 Gew.-%, bezogen auf das Gewicht des metallischen Kerns, aufweist. Die Erfindung betrifft ferner ein Verfahren zur Herstellung dieses Polystyrol-Hartschaum als auch dessen Verwendung sowie die Verwendung von Aluminiumpigmenten.

Die wärmeschutztechnischen Anforderungen in Neubauten und auch an Gebäuden im Bestand steigen mit der Einführung immer neuer Wärmeschutzverordnungen beständig. Gleichzeitig steigen aus wirtschaftlichen, bautechnischen und ökologischen Gründen auch die Anforderungen an die Langlebigkeit und Zuverlässigkeit von Baukonstruktionen. Neben der Verringerung des Energieeinsatzes ist in steigendem Maße auch die Verringerung des Materialeinsatzes bei der Herstellung von Wärmeisolationsmaterialien von Bedeutung. Es ist bekannt, wärmeisolierende Polystyrol-Hartschaumplatten zur Wärme- und zur Schallisolierung, vorzugsweise auf Außenwänden von Gebäuden, aufzubringen und dann die Außenfläche mit einer Putzschicht oder einer anderen wetterfesten und optisch ansprechenden Verkleidung zu versehen. Wärmedämmstoffe aus Polystyrol-Hartschaum bestehen aus einem porösen Festkörpergerüst mit einer sehr geringen Wärmeleitung über die Festkörperstruktur. Die über das in dem Polystyrol-Hartschaum enthaltende Gas erfolgende Wärmeleitung trägt im Falle von Luft bei Raumtemperatur mit 0,026 W/mK maßgeblich zur Gesamtwärmeleitfähigkeit des Polystyrol-Hartschaums bei. Der nicht an einen Stoff gebundene Transport in Form von Wärmestrahlung wird durch die Struktur, Dichte und die chemischen Bestandteile des Dämmmaterials bestimmt, indem Absorptions- und Streuprozesse den Infrarotstrahlungstransport durch das Wärmeisolationsmaterial behindern. Zur Reduktion der Festkörperwärmeleitfähigkeit sollte die Dichte des Dämmstoffs möglichst gering sein. Ein Vakuum wäre im Hinblick auf die Wärmeisolation ideal. Eine geringere Dichte eines Wärmeisolationsmaterials führt darüber hinaus zu einer Materialeinsparung, wodurch wertvolle Rohstoffe geschont werden. Auf der anderen Seite erhöht sich aufgrund der reduzierten Dichte die Strahlungswärmeleitfähigkeit durch den im Wärmeisolationsmaterial erhöhten Gasanteil signifikant. Um diese Erhöhung der Strahlungswärmeleitfähigkeit zu vermindern, können Infrarot-Trübungsmittel eingesetzt werden. Diese Trübungsmittel haben die Aufgabe, Wärmestrahlung effizient zu absorbieren und/oder zu reflektieren und/oder zu streuen und somit die Strahlungsextinktion im infraroten (IR) Wellenlängenspektrum (nahes IR und IR in einem Wellenlängenbereich von ca. 0,75 bis 25 µm) zu erhöhen, um damit die Strahlungswärmeleitfähigkeit zu reduzieren. Derartige Trübungsmittel werden auch als athermane Materialien bezeichnet. Beispiele solcher Infrarot-Trübungsmittel sind Titandioxid, Ruß oder Graphit.

Polystyrol-Hartschäume werden nach einem Extrusionsverfahren als extrudierter Polystyrol Hartschaum (XPS) oder nach einem Expansionsverfahren als expandierter Polystyrol Hartschaum (EPS) hergestellt. Die für die Baupraxis wesentlichen Unterschiede zwischen XPS und EPS sind die höhere Druckfestigkeit und geringere Wasseraufnahme des XPS im Vergleich zum EPS. Hinsichtlich der Ansätze zur Beeinflussung der Strahlungswärmeleitfähigkeit bestehen keine prinzipiellen Unterschiede.

Seit einiger Zeit wird angestrebt, mit einem möglichst geringen Polystyroleinsatz bei der Herstellung von Wärmedämmelementen ein möglichst optimales Wärmeisolationsvermögen zu erzielen. Dies hat dazu geführt, dass auch Polystyrolhartschaum mit einer Dichte unterhalb von 20 kg/m³ bei der Herstellung von Wärmedämmelementen in Betracht gezogen wird. Ein Polystyrolhartschaum mit so geringer Dichte besitzt jedoch eine vergleichsweise hohe Wärmeleitfähigkeit von mehr als 40 mW/mK.

In der EP 0 620 246 B1 wird daher vorgeschlagen, in den Polystyrolpartikelschaum ein infrarotabsorbierendes Material einzubringen. Das infrarotabsorbierende Material kann auf die Oberfläche der Polystyrolschaumperlen angelagert werden, indem diese von außen beschichtet oder benetzt werden. Erst anschließend an diese Beschichtung findet eine Verschweißung der mit dem infrarotabsorbierenden Material versehenen und vorgeschäumten Polystyrolschaumperlen zum Polystyrolhartschaumformkörper statt. Das infrarotabsorbierende Material kann auch schon dem ungeschäumten Polystyrol zugeführt werden. Versuche haben gezeigt, dass ein Anteil von 0,5 bis 5 Gew.-% infrarotabsorbierendem Material, bezogen auf das Gewicht des fertigen Formkörpers, zu der gewünschten Absorption von IR-Strahlung führt. Als infrarotabsorbierende Materialien können Metalloxide, beispielsweise Fe₂O₃ oder Al₂O₃, Nichtmetalloxide, wie zum Beispiel SiO₂, Metallpulver, Aluminiumpulver, Kohlenstoff oder organische Farbstoffe verwendet werden.

Aus der EP 1 159 338 B1 sind teilchenförmige, expandierbare Styrolpolymerisate (EPS) bekannt, die zu Hartschaumstoffen mit feiner Zellstruktur und geringer Dichte verarbeitbar sind und die für die Herstellung zumindest ein Treibmittel enthalten und zur Verbesserung ihrer Wärmedämmeigenschaften zumindest Aluminium in Teilchenform aufweisen. Die Aluminiumteilchen sind in homogener Verteilung als infrarotreflektierendes Material eingearbeitet, wobei der Hauptteil der Aluminiumteilchen als Plättchen vorliegt, deren größte Abmessung zwischen 1 und 15 µm liegt. Gemäß der Lehre der EP 1 159 338 B1 weist die Plättchenform der Aluminiumteilchen eine größere Oberfläche im Vergleich zur Kugelform auf und kann dadurch die Infrarotstrahlung stark reflektieren. Eine gute IR-Strahlenreflexion wird erhalten, wenn der Durchmesser der Plättchen zumindest das 10-fache der mittleren Dicke der Plättchen, d.h. das Aspektverhältnis Durchmesser/Dicke > 10/1 beträgt. Der Gewichtsanteil der Aluminiumteilchen, bezogen auf das Gewicht des Polymers, liegt unter 6 Gew.-%. Die plättchenförmigen Aluminiumpigmente werden durch einen zusätzlichen Vermahlungsschritt von Aluminiumgriess erhalten. Weiterhin lehrt die EP 1 159 338 B1, dass zusätzlich zu den plättchenförmigen Aluminiumteilchen noch weitere Infrarotstrahlen dämmende Materialien in dem Styrolpolymerisat vorliegen können, um die Wärmedämmeigenschaften zu verbessern. Zur Ausnutzung eines synergistischen Effekts wird die Verwendung von absorbierend wirkendem Antimontrisulfid, Ruß oder Graphit bevorzugt. Nachteilig an der Zugabe von Ruß oder Graphit ist die mit diesen Materialien eingebrachte Brandlast, die die absolute Zugabemenge begrenzt und nur bis etwa 2 Gew.-%, bezogen auf das Polymer, durch erhöhte Zugabe üblicher Flammschutzsysteme kompensiert werden kann.

Aus der EP 2 010 601 B1 ist ein geschäumter Werkstoff bekannt, der aus einer Mischung von Styrolpolymerisatpartikeln mit athermanen Materialien mit überwiegend reflektorischen Eigenschaften, sogenannten Reflektorpartikeln, und von Styrolpolymerisatpartikeln mit athermanen Materialien mit überwiegend absorbierenden Eigenschaften, sogenannten Absorberpartikeln, gebildet ist. Reflektorpartikel und Absorberpartikel werden unabhängig voneinander hergestellt, was einen größeren Aufwand bei der Herstellung des geschäumten Werkstoffes bedeutet.

Aufgrund ihrer hohen IR-Reflexion sind insbesondere Metallpigmente geeignet, den von dem zu isolierenden Gegenstand abgegebenen IR-Strahlungsanteil durch Reflexion zu verringern. Trotzdem haben sich Metallpigmente bislang am Markt nicht gegenüber anderen athermanen Stoffen wie beispielsweise Graphit durchsetzen können.

Ein Grund hierfür liegt unter anderem darin, dass Hartschaumplatten zur Wärmedämmung häufig im Kontakt zu Putzen, d.h. sehr stark alkalischen Oberflächen stehen. Die Alkalien können dann aus den Putzen zum Teil in die Hartschaumplatte diffundieren und die Metallpigmente zumindest teilweise durch Korrosion zerstören, insbesondere bei kleineren Metallpigmenten. Damit geht ein entsprechender Verlust des IR-Strahlungs-Reflexionsvermögens einher, was sich an einer Verschlechterung der Wärmeleitfähigkeit über einen längeren Zeitraum zeigt.

Ein weiterer Grund, weswegen sich insbesondere Aluminiumpigmente als Zusatz bei Wärmeisolationselementen bislang im Markt nicht durchgesetzt haben, liegt darin, dass Aluminiumpigmente bei der Einarbeitung in die Hartschaumplatte gegenüber Wasserdampf ausgesetzt sind. Unter diesen stark korrosiven Bedingungen kann ein Teil der Aluminiumpartikel oxidiert werden, wodurch das IR-Strahlung-Reflexionsvermögen erheblich beeinträchtigt werden kann. Zudem ist diese Oxidation sicherheitstechnisch bedenklich, da dabei Wasserstoff entstehen kann und zudem die Oxidation von Aluminium eine stark exotherme Reaktion ist.

Eine Aufgabe der Erfindung ist es, ausgehend von diesem Stand der Technik einen Wärmedämmstoff mit verringerter Strahlungswärmeleitfähigkeit und verbessertem Wärmereflexionsvermögen bei vergleichbaren Herstellkosten oder einen Wärmedämmstoff mit zum Stand der Technik vergleichbarer Strahlungswärmeleitfähigkeit und Wärmereflexionsvermögen mit geringeren Herstellkosten bereitzustellen.

Diese Aufgabe wird gelöst durch die Bereitstellung eines Polystyrol-Hartschaums enthaltend Aluminiumpigmente mit einem metallischen Kern, wobei der metallische Kern der Aluminiumpigmente einen Anteil an elementarem Aluminium von wenigstens 50 Gew.-%, bezogen auf das Gewicht des metallischen Kerns, aufweist, wobei die Aluminiumpigmente in Form von Plättchen, deren d_{50,flake}-Wert zwischen 1 µm 25 µm liegt, und in Form von Aluminiumgrieß mit einem mittleren Durchmesser d_{50,Grieß} zwischen 0,5 und 25 µm, bevorzugt von 0,5 bis 10 µm, vorliegen, wobei der Anteil des Aluminiumgrießes an dem Gesamtgewicht der Aluminiumpigmente in einem Bereich von 60 Gew.-% bis 90 Gew.-% und der Anteil der Aluminiumplättchen an dem Gesamtgewicht der Aluminiumpigmente in einem Bereich von 40 Gew.-% bis 10 Gew.-% liegt, und die Aluminiumpigmente als homogene Mischung im Polystyrol-Hartschaum vorliegen.

Die Angaben in Gew.-% beziehen sich bei dem Aluminiumanteil auf das Gewicht des metallischen Kerns der Aluminiumpigmente, d.h. ohne den Gewichtsanteil einer etwaigen Nachbeschichtung, beispielsweise in Form einer metalloxidischen Beschichtung oder einer Polymerbeschichtung.

Die Angaben in Gew.-% beziehen sich bei dem Anteil an Aluminiumgrieß und dem Anteil an Aluminiumplättchen der Aluminiumpigmente, d.h. der Mischung aus Aluminiumgrieß und Aluminiumplättchen, jeweils auf das Gesamtgewicht der Aluminiumpigmente, d.h. auf plättchenförmige Aluminiumpigmente und Aluminiumgrieß, d.h. einschließlich des Gewichts einer etwaigen Nachbeschichtung, die beispielsweise zur Verbesserung der Beständigkeit gegenüber Korrosion aufgebracht wurde(n).

Unter den Begriff "Aluminiumpigmente" fallen erfindungsgemäß "plättchenförmige Aluminiumpigmente" und "Aluminiumgrieß". Die "plättchenförmigen Aluminiumpigmente" werden erfindungsgemäß auch als "Aluminiumpigmente in Plättchenform" oder als "Aluminiumplättchen" bezeichnet. Diese Begriffe werden in der vorliegenden Anmeldung austauschbar, d. h. synonym verwendet.

Bevorzugte Weiterbildungen des erfindungsgemäßen Polystyrol-Hartschaumes sind in den Unteransprüchen 2 bis 9 angegeben.

Die der vorliegenden Erfindung zugrunde liegende Aufgabe wird auch durch Bereitstellung eines Verfahrens zum Herstellen von extrudiertem Polystyrol-Hartschaum nach einem der Ansprüche 1 bis 9 gelöst, wobei das Verfahren folgende Schritte umfasst:
(a1) Einbringen von Aluminiumpigmenten mit einem metallischen Kern, der einen Anteil an elementarem Aluminium von wenigstens 50 Gew.-%, bezogen auf das Gewicht des metallischen Kerns aufweist, wobei die Aluminiumpigmente in Form von Plättchen, deren d_{50,flake}-Wert in einem Bereich von 1 bis 25 µm liegt, und in Form von Aluminiumgrieß mit einem mittleren Durchmesser d_{50,Grieß} in einem Bereich von 0,5 bis 25 µm, bevorzugt von 0,5 bis 10 µm, vorliegen, wobei der Anteil des Aluminiumgrießes an dem Gesamtgewicht der Aluminiumpigmente in einem Bereich von 60 Gew.-% bis 90 Gew.-% und der Anteil der Aluminiumplättchen an dem Gesamtgewicht der Aluminumpigmente in einem Bereich von 40 Gew.-% bis 10 Gew.-% liegt, und die Aluminiumpigmente als homogene Mischung vorliegen, in eine Treibmittel-haltige Styrolpolymer- und/oder Styrolcopolymerschmelze, oder
(a2) Einbringen von Aluminiumpigmenten mit einem metallischen Kern, der einen Anteil an elementarem Aluminium von wenigstens 50 Gew.-% bezogen auf das Gewicht des metallischen Kerns aufweist, wobei die Aluminiumpigmente in Form von Plättchen, deren d_{50,flake}-Wert in einem Bereich von 1 bis 25 µm liegt, und in Form von Aluminiumgrieß mit einem mittleren Durchmesser d_{50,Grieß} in einem Bereich von 0,5 bis 25 µm, bevorzugt von 0,5 bis 10 µm, vorliegen, wobei der Anteil des Aluminiumgrießes an dem Gesamtgewicht der Aluminiumpigmente in einem Bereich von 60 Gew.-% bis 90 Gew.-% und der Anteil der Aluminiumplättchen an dem Gesamtgewicht der Aluminumpigmente in einem Bereich von 40 Gew.-% bis 10 Gew.-% liegt und die Aluminiumpigmente als homogene Mischung in Styrolpolymer und/oder Styrolcopolymer vorliegen, und nachfolgendem Schmelzen des Aluminiumpigmente-haltigen Styrolpolymers und/oder Styrolcopolymers in Gegenwart oder unter nachfolgender Zugabe von Treibmittel,
(b) Extrudieren und Aufschäumen der Schmelze unter Erhalt von extrudierten Aluminiumpigmente-haltigem Polystyrol-Hartschaum.

Die der Erfindung zugrunde liegende Aufgabe wird auch durch Bereitstellung eines Verfahrens zum Herstellen von expandiertem Polystyrol-Hartschaum nach einem der Ansprüche 1 bis 9 gelöst, wobei das Verfahren folgende Schritte umfasst:
(a1) Einbringen von Aluminiumpigmenten mit einem metallischen Kern, der einen Anteil an elementarem Aluminium von wenigstens 50 Gew.-%, bezogen auf das Gewicht des metallischen Kerns, aufweist, wobei die Aluminiumpigmente in Form von Plättchen, deren d_{50,flake}-Wert in einem Bereich von 1 bis 25 µm liegt, und in Form von Aluminiumgrieß mit einem mittleren Durchmesser d_{50,Grieß} in einem Bereich von 0,5 bis 25 µm, bevorzugt von 0,5 bis 10 µm, vorliegen, wobei der Anteil des Aluminiumgrießes an dem Gesamtgewicht der Aluminiumpigmente in einem Bereich von 60 Gew.-% bis 90 Gew.-% und der Anteil der Aluminiumplättchen an dem Gesamtgewicht der Aluminumpigmente in einem Bereich von 40 Gew.-% bis 10 Gew.-% liegt, und die Aluminiumpigmente als homogene Mischung vorliegen, in eine Treibmittel-haltige Styrolpolymer- und/oder Styrolcopolymerschmelze, oder
(a2) Einbringen von Aluminiumpigmenten mit einem metallischen Kern, der einen Anteil an elementarem Aluminium von wenigstens 50 Gew.-%, bezogen auf das Gewicht des metallischen Kerns, aufweist, wobei die Aluminiumpigmente in Form von Plättchen, deren d_{50,flake}-Wert in einem Bereich von 1 bis 25 µm liegt, und in Form von Aluminiumgrieß mit einem mittleren Durchmesser d_{50,Grieß} in einem Bereich von 0,5 bis 25 µm, bevorzugt von 0,5 bis 10 µm, vorliegen, wobei der Anteil des Aluminiumgrießes an dem Gesamtgewicht der Aluminiumpigmente in einem Bereich von 60 Gew.-% bis 90 Gew.-% und der Anteil der Aluminiumplättchen an dem Gesamtgewicht der Aluminumpigmente in einem Bereich von 40 Gew.-% bis 10 Gew.-% liegt und die Aluminiumpigmente als homogene Mischung in Styrolpolymer und/oder Styrolcopolymer vorliegen, und nachfolgendem Schmelzen des Aluminiumpigmente-haltigen Styrolpolymers und/oder Styrolcopolymers in Gegenwart oder unter nachfolgender Zugabe von Treibmittel,
(b) Extrudieren der Schmelze unter Erhalt von Aluminiumpigmente-haltigen Styrolpolymer- und/oder Styrolcopolymerpartikeln,
(c) Verschäumen der in Schritt (b) erhaltenen Styrolpolymer- und/oder Styrolcopolymerpartikel unter Erhalt von expandiertem Aluminiumpigmente-haltigem Polystyrol-Hartschaum.

Bevorzugte Weiterbildungen der Verfahren sind in den Unteransprüchen 12 bis 14 angegeben.

Die der Erfindung zugrunde liegende Aufgabe wird auch durch die Verwendung des Polystyrol-Hartschaums nach einem der Ansprüche 1 bis 9 als Dämmmaterial, insbesondere für Fassaden, Dächer oder Böden, gelöst.

Schließlich wird die Aufgabe der Erfindung auch durch die Verwendung von Aluminiumpigmenten mit einem metallischen Kern gelöst, wobei der metallische Kern einen Anteil an elementarem Aluminium von wenigstens 50 Gew.-%, bezogen auf das Gewicht des metallischen Kerns aufweist, wobei die Aluminiumpigmente in Form von Plättchen, deren d_{50,flake}-Wert in einem Bereich von 1 bis 25 µm liegt, und in Form von Aluminiumgrieß mit einem mittleren Durchmesser d_{50,Grieß} in einem Bereich von 0,5 bis 25 µm, bevorzugt von 0,5 bis 10 µm, vorliegen, wobei der Anteil des Aluminiumgrießes an dem Gesamtgewicht der Aluminiumpigmente in einem Bereich von 60 Gew.-% bis 90 Gew.-% liegt und die Aluminiumpigmente als homogene Mischung vorliegen, als athermanes Material in Polystyrol-Hartschaum.

Unter dem d₅₀-Wert ist im Sinne der Erfindung die mittlere Partikelgröße zu verstehen, bei der 50 % der flächengemittelten Partikelgrößenverteilung unter und 50 % der flächengemittelten Partikelgrößenverteilung über der genannten Größe liegen. Entsprechend ist unter einem d₁₀-Wert zu verstehen, dass 10 % der flächengemittelten Partikelgrößenverteilung unter und 90 % der flächengemittelten Partikelgrößenverteilung über der genannten Größe liegen. Entsprechend ist unter einem d₉₀-Wert zu verstehen, dass 90 % der flächengemittelten Partikelgrößenverteilung unter und 10 % der flächengemittelten Partikelgrößenverteilung über der genannten Größe liegen.

Gemäß einer Weiterbildung der Erfindung ist es bevorzugt, wenn in der homogenen Mischung die plättchenförmigen Aluminiumpigmente einen d_{50,flake-} Wert aus einem Bereich von 2,0 µm bis 15 µm und weiter bevorzugt von 2,5 µm bis 10 µm und besonders bevorzugt von 3,0 µm bis 6 µm aufweisen.

Gemäß einer Weiterbildung der Erfindung ist es bevorzugt, wenn in der homogenen Mischung die plättchenförmigen Aluminiumpigmente eine Größenverteilung von d_{10,flake} aus einem Bereich von 1,0 bis 2,3 µm, d_{50,flake} einem Bereich von 2,5 bis 8 µm und d_{90,flake} aus einem Bereich von 8 bis 25 µm aufweist.

In weiteren bevorzugten Ausführungsformen weist der Aluminiumgrieß eine Größenverteilung mit einem d_{50,Grieß}-Wert aus einem Bereich von 0,5 bis 10 µm, weiter bevorzugt aus einem Bereich von 0,8 bis 6 µm, besonders bevorzugt aus einem Bereich von 1,0 bis 4 µm und ganz besonders bevorzugt aus einem Bereich von 1,2 µm bis 3,0 µm auf

Weiterhin hat sich ein Aluminiumgrieß mit einer Größenverteilung mit einem d_{50,Grieß}-Wert aus einem Bereich von 8 bis 20 µm und weiter bevorzugt von über 10 bis 15 µm als geeignet erwiesen.

Ein besonders bevorzugter Aluminiumgrieß weist eine Größenverteilung mit den Kennwertsbereichen: d_{10,Grieß} = 0,5 bis 1,2 µm, d_{50,Grieß} = 1,2 bis 3,0 µm und d_{90,Grieß} = 2,5 bis 5 µm auf.

Weiter bevorzugt weisen in der homogenen Mischung die plättchenförmigen Aluminiumpigmente eine Größenverteilung von d_{10,flake} aus einem Bereich von 1,0 bis 2,3 µm, d_{50,flake} einem Bereich von 2,5 bis 8.µm und d_{90,flake} aus einem Bereich von 8 bis 25 µm und der Aluminiumgrieß eine Größenverteilung von d_{10,Grieß} = 0,5 bis 1,2 µm, d_{50,Grieß} = 1,2 bis 3,0 µm und d_{90,Grieß} = 2,5 bis 5 µm auf.

Zur Größenmessung sind folgende Methoden zweckmäßig: Liegen die Aluminiumpigmente in Form von Pulvern oder Pasten vor, so wird deren Größenverteilung vorzugsweise mit Hilfe eines Accusizers von der Firma Particle Sizing Systems, Inc. (Santa Barbara, USA) gemäß Herstellerangaben bestimmt.

Bei einem Accusizer wird die Größe eines Partikels durch eine optische Extinktionsmessung ermittelt. Die Anzahl und Partikelgrößenverteilung wird durch Auswertung der Lichtabschattung in einem Laserfeld, welche von jedem einzelnen das Detektorfeld durchströmenden Partikel hervorgerufen wird, bestimmt. Die Konzentration der Partikel in der Messdispersion ist sehr niedrig und liegt bei ca. 2000 Partikel/ml. Als Gerät wird bevorzugt ein Accusizer 780 APS der Firma Particle Sizing Systems verwendet.

Die Auswertung erfolgt gemäß Herstellerangaben. Bei der Auswertung der Messdaten werden zunächst die gemessenen Signale, die im Prinzip einer optischen Abschattungsfläche entsprechen, auf einen Äquivalentkreis umgerechnet und anschließend als Flächenmittelverteilung statistisch ausgewertet. Man erhält eine flächenbezogene Durchgangsverteilungskurve.

Wenn die Partikelgrößenverteilung der Aluminiumpigmente im Polystyrolhartschaum erfolgt, können geeignete Schnitte des Aluminiumpigmente-haltigen Hartschaumes präpariert und anschließend optisch mittels eines Mikroskops und/oder Elektronenmikroskops (REM) vermessen werden. Bevorzugt wird hierbei ein Mikroskop verwendet, bei dem eine Draufsicht auf die plättchenförmigen Aluminiumpigmente erhalten wird und die Abmessungen der plättchenförmigen Aluminiumpigmente bestimmen werden können. Die Werte können als Zahlenmittel oder, nach entsprechender Umrechnung, als Flächenmittel bestimmt werden. Mit dieser Methode kann auch gut zwischen plättchenförmigen Aluminiumpigmenten und Aluminiumgrieß unterschieden werden.

Bei Messungen im REM misst man grundsätzlich anhand eines Querschliffs. Es kann hierbei das Problem auftreten, dass man angeschliffene Pigmente vermisst, die eine zu niedrige Länge vortäuschen.

Es ist aber auch möglich, die Aluminiumpigmente aus dem Polystyrol-Hartschaum zu isolieren, beispielsweise durch Auflösen des Polystyrols in einem Lösungsmittel und Abfiltrieren der Aluminiumpigmente oder durch thermische Behandlung des Aluminiumpigmente-haltigen Polystyrols, so dass die Aluminiumpigmente zurückbleiben. Die so erhaltenen Aluminiumpigmente können sodann beispielsweise mit dem Accusizer in Bezug auf die Partikelgrößenverteilung vermessen werden.

Die Erfinder haben erkannt, dass in Abkehr von der Lehre der EP 1 159 338 B1 bei einer Verringerung des Anteils von Aluminiumplättchen, die ein sehr großes IR-Reflexionsvermögen aufweisen, und deren Ersatz durch Aluminiumgrieß, der ein geringeres IR-Reflexionsvermögen und eine höhere IR-Absorption aufweist, in Polystyroldämmstoffen überraschenderweise verbesserte IR-Dämmeigenschaften erhalten werden. Mithin liegt erfindungsgemäß der größere Gewichtsanteil der Aluminiumpigmente in Form von Aluminiumgrieß und der entsprechend kleinere Gewichtsanteil der Aluminiumpigmente in Form von Aluminiumplättchen vor.

Der Grund für das überraschende synergistische Zusammenwirken von Aluminiumplättchen und Aluminiumgrieß ist nicht abschließend geklärt. Die Erfinder vermuten, dass auch bei einem signifikant verringerten Anteil von plättchenförmigen Aluminiumpigmenten gleichwohl eine ausreichende IR-Reflexion noch gegeben ist, mithin die Zunahme der Strahlungswärmeleitfähigkeit geringer als erwartet ausfällt. Der Aluminiumgrieß verleiht dem Polystyroldämmstoff ein größeres IR-Absorptionsvermögen, wodurch die Abnahme der IR-Reflexion weitgehend kompensiert wird.

Ohne an eine Theorie gebunden sein zu wollen, vermuten die Erfinder, dass durch die Verwendung einer erfindungsgemäßen Mischung der plättchenförmigen Aluminiumpigmente und des Aluminiumgrieß auch eine bessere Raumaufteilung der Aluminiumpigmente im Polystyrolschaum gegeben ist. Die Aluminiumgrießpartikel weisen pro g Aluminiumpigment in der Regel mehr Partikel auf, wohingegen die plättchenförmigen Aluminiumpigmente aufgrund ihrer größeren Raumausdehnung einen höheren Extinktionskoeffizienten für Wärmestrahlung haben. Insbesondere bei geringen Pigmentierungshöhen, d.h. bei einem geringen Aluminiumpigmentgehalt, liegen die plättchenförmigen Pigmente deutlich vereinzelt innerhalb der Polymerschaumlamellen. Polymervolumina, die nur unzureichend von den plättchenförmigen Pigmenten ausgefüllt sind, können nunmehr von den Grießpartikeln ausgefüllt werden.

Weiterhin vermuten die Erfinder, dass im Fall einer Benutzung von ausschließlich plättchenförmigen Aluminiumpigmenten ein großer Anteil dieser Pigmente als Nukleierungszentren bei der Bildung des Schaums fungieren und daher in den Streben (engl.: strut) des Polymerschaums lokalisiert ist. Hier jedoch sind die Pigmente optisch weniger wirksam, da die Polymerstrebe an sich aufgrund ihrer höheren Dicke nur einen geringen IR-Strahlungsanteil durchlässt.

In der erfindungsgemäßen Mischung hingegen liegen die Aluminiumgrießpartikel in der Regel in höherer Anzahl als die plättchenförmigen Partikel vor. Es wird ein Teil der Aluminiumgrießpartikel anstelle der plättchenförmigen Aluminiumpigmente in die Streben eingebaut, was wiederum zu einem relativ höheren Anteil der plättchenförmigen Aluminiumpartikel in den Wänden des Polymerschaums führt, wodurch sie die IR-Strahlung effektiver abschirmen können.

Die Erfinder haben mithin festgestellt, dass die Verwendung einer homogenen Mischung von plättchenförmigen Aluminiumpigmenten und Aluminiumgrieß notwendig und auch von Vorteil ist.

Äußerst vorteilhaft wird zum Einen die Materialmischung einfach gehalten, da dass Dämmmaterial vorzugsweise nur Polystyrol und eine Mischung aus plättchenförmigen Aluminiumpigmenten und Aluminumgrieß aufweist. Dies erleichtert die Entsorgung von Dämmmaterialabfällen oder von gebrauchtem Dämmmaterial. Zum Anderen werden äußerst vorteilhaft auch chemische Reaktionen zwischen den plättchenförmigen Aluminiumpigmenten bzw. dem Aluminiumgrieß mit weiteren etwaigen Komponenten verhindert, wodurch das Reflexionsvermögen bzw. das Absorptionsvermögen der Aluminiumpigmente erhalten bleibt.

Des Weiteren hat sich als Vorteil herausgestellt, dass, da sowohl die plättchenförmigen Aluminiumpigmente als auch der Aluminiumgrieß im wesentlichen identische Materialeigenschaften aufweisen, beispielsweise die gleiche oder eine ähnliche Dichte und/oder Oberflächeneigenschaften aufweisen, keine Entmischungsvorgänge auftreten, die einer homogenen Mischung der plättchenförmigen Aluminiumpigmente und des Aluminiumgrieß entgegenwirken, insbesondere bei der Herstellung des Polystyroldämmmaterials mittels Expansion (EPS) oder Extrusion (XPS). Somit erlaubt die vorliegende Erfindung insbesondere die Bereitstellung von Polystyrol-Dämmmaterial aus Styrolpolymer und/ oder Styrolcopolymer, in dem eine homogene Mischung plättchenförmiger Aluminiumpigmente und Aluminiumgrieß vorliegt, wodurch das Polystyroldämmmaterial über die Fläche eine einheitliche Wärmedämmqualität aufweist.

Die vorliegende Erfindung erlaubt mithin die Bereitstellung eines Polystyrol-Hartschaums mit einem verbesserten Wärmeleitfähigkeitswert λ, beispielsweise von λ < 0,03 W/mK, weiter bevorzugt von λ < 0,029 noch weiter bevorzugt von λ < 0,028 W/mK, wobei der Gehalt an Aluminiumgrieß und plättchenförmigem Aluminiumpigment gering gehalten werden kann. Ein möglicht geringer Gehalt an Aluminiumgrieß und plättchenförmigem Aluminiumpigment ist wesentlich, um im Hinblick auf die Kosten für das Aluminium ein kostenmäßig wettbewerbsfähiges Produkt zu erhalten. Signifikante Kosten können vermieden werden, wenn der Anteil an plättchenförmigen Aluminiumpigmenten möglichst gering gehalten wird, da plättchenförmige Aluminiumpigmente aufgrund des notwendigen Vermahlungsschrittes inklusive anschließender Weiterverarbeitungsschritte (z.B. Sieben, Anpasten oder Trocknen) sehr viel teurer sind als Aluminiumgrieß.

Überraschend hat sich bei Untersuchungen herausgestellt, dass bei Verwendung einer Mischung von plättchenförmigen Aluminiumpigmenten und Aluminiumgrieß in einem Polystyroldämmmaterial der Wirkungsverlust, verglichen mit einem Polystyroldämmmaterial, das nur Aluminiumplättchen, und mithin keinen Aluminiumgrieß, enthält, aufgrund eines unerwarteten synergistischen Zusammenwirkens überraschend gering ist, vorzugsweise überhaupt nicht auftritt. Dieser Wirkungsverlust kann ausgeglichen werden durch eine Erhöhung des Gesamtgehalts an Aluminiumpigmenten in dem Polystyroldämmmaterial, wobei die Erhöhung maximal etwa 20 Gew.-%, bezogen auf das Gewicht an Aluminiumplättchen des Vergleichs-Polystyroldämmmaterials beträgt.

Die plättchenförmigen Aluminiumpigmente werden durch mechanische Verformung von Aluminiumgrieß hergestellt. Üblicherweise werden die plättchenförmigen Aluminiumpigmente durch Vermahlung von Aluminumgrieß, beispielsweise in einer Kugelmühle, in Gegenwart von Mahlkörpern, beispielsweise von Stahl- oder Keramikkugeln, erhalten.

Die Vermahlung kann sowohl durch das Naßmahlverfahren (Hall-Prozess) als auch durch das Trockenmahlverfahren (Hametag-Prozess) erfolgen.

Der für die Herstellung der plättchenförmigen Aluminiumpigmente erforderliche Vermahlungsschritt wird mithin eingespart, soweit die plättchenförmigen Aluminiumpigmente durch Aluminiumgrieß ersetzt sind. Hierdurch erfolgt eine signifikante Verringerung der bei der Herstellung von plättchenförmigen Aluminiumpigmente-haltigem Polystyroldämmmaterial anfallenden Kosten. Die Verringerung der Kosten durch den verringerten Anteil an plättchenförmigen Aluminiumpigmenten ist größer als etwaige Mehrkosten, die durch eine optionale Erhöhung des Anteils an Aluminiumgrieß in dem Polystyroldämmmaterial verursacht werden.

Der erfindungsgemäße Polystyrolhartschaum ist mithin wesentlich kostengünstiger herzustellen als ein Polystyrolhartschaum, der als Aluminiumpartikel ausschließlich plättchenförmige Aluminiumpartikel enthält, auch wenn durch den Zusatz an Aluminiumgrieß bei dem erfindungsgemäßen Polystyrolhartschaum der absolute Gehalt an Aluminium, bezogen auf den Polystyrolhartschaum höher sein kann.

Eine Voraussetzung für eine intensive synergistische Wirkung ist, dass die reflektierend wirkenden Aluminiumplättchen und der sowohl reflektierend als auch absorbierend wirkende Aluminiumgrieß als homogene Mischung, d.h. vorzugsweise in enger räumlicher Nachbarschaft, in dem Polystyrol-Hartschaum vorliegen. Aus diesem Grund ist es zwingend erforderlich, das die plättchenförmigen Aluminiumpigmente und der Aluminiumgrieß als homogene Mischung bei der Herstellung des Polystyrolhartschaumes aus Styrolpolymer und/oder Styrolcopolymer eingebracht werden.

Eine Einbringung in Form einer Mischung aus mit Aluminiumgrieß pigmentierten ersten Styrolpartikeln und mit Aluminiumplättchen pigmentierten zweiten Styrolpartikeln in Anlehnung an die EP 2 010 601 B1, auch wenn es sich bei den mit Aluminiumgrieß pigmentierten ersten Styrolpartikeln nach der EP 2 010 601 B1 nicht um Absorberpartikel handelt, zeigt nicht die intensive synergistische Wirkung.

Aluminiumgrieß ist als Handelsprodukt von einer Vielzahl von Anbietern erhältlich. Er kann eine weitgehend sphärische, jedoch auch unregelmäßige Form, die auch als spratzige Form bezeichnet werden kann, aufweisen. Ein Aluminiumgrieß weist erfindungsgemäß einen Formfaktor, der als das Verhältnis der durchschnittlichen Länge zur durchschnittlichen Breite der Partikel definiert ist, von weniger als 5, vorzugsweise von weniger als 4, weiter vorzugsweise von weniger als drei, noch weiter bevorzugt von weniger als zwei auf. Als sehr geeignet hat sich ein im Wesentlichen sphärischer Aluminiumgrieß erwiesen, der einen Formfaktor im Bereich von 1,9 bis 1, weiter bevorzugt von 1,5 bis 1,05 aufweist.

Plättchenförmige Aluminiumpigmente können ebenfalls in einer Vielzahl von unterschiedlichen Größen, Größenverteilungen und Dicken kommerziell erhalten werden. Plättchenförmige Aluminiumpigmente weisen erfindungsgemäß einen Formfaktor auf, der größer als fünf, vorzugsweise größer als 10, weiter bevorzugt größer als 20, noch weiter bevorzugt größer als 50, ist. Als sehr geeignet hat sich ein Formfaktor aus einem Bereich von 6:1 bis 300:1, weiter bevorzugt von 10:1 bis 100:1, noch weiter bevorzugt von 20: 1 bis 100:1, noch weiter bevorzugt von 40:1 bis 90:1, erwiesen.

Als sehr geeignet hat sich die Verwendung einer homogenen Mischung von Aluminiumpigmenten erwiesen, bei der die plättchenförmigen Aluminiumpigmente einen Formfaktor von 20 :1 bis 100 :1 und der Aluminiumgrieß einen Formfaktor von 3 :1 bis 1 :1, aufweist. Weiter bevorzugt weisen in der homogenen Mischung die plättchenförmigen Aluminiumpigmente einen Formfaktor von 40 :1 bis 90 :1 und der Aluminiumgrieß einen Formfaktor von 2 :1 bis 1 :1, auf.

Vorteilhaft können durch den Einsatz desselben athermanen Materials, d.h. plättchenförmige Pigmente und Grieß auf Basis von Aluminium, antagonistische Wirkungen von unterschiedlichen athermanen Materialien vermieden werden.

Es ist bevorzugt, dass der Anteil des Aluminiumgrießes an dem Gesamtgewicht der Aluminiumpigmente in einem Bereich von 60 Gew.-% bis 80 Gew.-% und der Anteil der plättchenförmigen Aluminiumpigmente an dem Gesamtgewicht der Aluminiumpigmente in dem Polystyrolhartschaum in einem Bereich von 40 Gew.-% bis 20 Gew.-% liegt, wobei die plättchenförmigen Aluminiumpigmente und der Aluminiumgrieß zusammen jeweils 100 Gew.-% der Aluminiumpigmente ergeben. Besonders bevorzugt liegt der Anteil des Aluminiumgrießes an dem Gesamtgewicht der Aluminiumpigmente in einem Bereich von 65 Gew.-% bis 75 Gew.-% und der Anteil der plättchenförmigen Aluminiumpigmente an dem Gesamtgewicht der Aluminiumpigmente liegt entsprechend in einem Bereich von 35 Gew.-% bis 25 Gew.-%.

Es ist bevorzugt, dass der Anteil der Aluminiumpigmente, die aus den plättchenförmigen Aluminiumpigmenten und dem Aluminiumgrieß bestehen, in einem Bereich von 0,1 bis 10 Gew.-%, bezogen auf das Gesamtgewicht des Polystyrol-Hartschaumes, beträgt. Weiter bevorzugt ist ein Anteil in einem Bereich von 0,5 bis 8 Gew.-% und besonderes bevorzugt ein Anteil in einem Bereich von 2 bis 6 Gew.-%, jeweils bezogen auf das Gesamtgewicht des Polystyrol-Hartschaumes. Als sehr geeignet hat sich ein Anteil in einem Bereich von 4,0 Gew.-% bis 5,5 Gew.-% erwiesen. Das Gesamtgewicht des Polystyrol-Hartschaumes setzt sich aus dem Gewicht des Polystyrols sowie dem Gewicht der Aluminiumpigmente sowie dem Gewicht etwaiger Zusatzstoffe zusammen.

Das Aluminiummetall des metallischen Kerns der plättchenförmigen Aluminiumpigmente und des Aluminiumgrieß kann unabhängig voneinander andere Metalle in Mengen bis zu 50 Gew.-%, vorzugsweise bis zu 30 Gew.-%, bevorzugt bis zu 10 Gew.-%, weiter bevorzugt bis zu 2 Gew.-% und besonders bevorzugt bis zu 1 Gew.-%, jeweils bezogen auf das Gesamtgewicht des metallischen Kerns der plättchenförmigen Aluminiumpigmente bzw. des Aluminiumgrieß, aufweisen. Diese anderen Metalle können als Verunreinigungen des Aluminiums und/oder als Legierungskomponenten vorliegen.

Vorzugsweise weisen die plättchenförmigen Aluminiumpigmente und der Aluminiumgrieß eine weitgehend identische, vorzugsweise identische, metallische Zusammensetzung auf. Weiterhin ist bevorzugt, dass sowohl der metallische Kern der plättchenförmigen Aluminiumpigmente als auch der metallische Kern des Aluminiumgrießes einen Aluminiumgehalt aus einem Bereich von 85 bis 100 Gew.-%, weiter bevorzugt von 90 bis 99,9 Gew.-%, noch weiter bevorzugt von 95 bis 99,85 Gew.-%, noch weiter bevorzugt von 98 bis 99 Gew.-%, jeweils bezogen auf den Gewicht des metallischen Kerns, aufweisen.

Weiterhin bevorzugt ist, dass der Aluminiumgrieß einen mittleren Durchmesser d_{50,Grieß} aus einem Bereich von 0,8 bis 6 µm und besonders bevorzugt aus einem Bereich von 1,0 bis 5 µm aufweist. Derartige Pigmente sind beispielsweise mittels des bekannten Verdüsungsverfahrens durch Zerstäuben (atomizing) und optional nachfolgender Klassierung herzustellen.

Beispielsweise kann der Aluminiumgrieß wie in der EP 208 1997 B1 beschrieben, verwendet werden.

Um einer Beeinträchtigung der IR-Wirksamkeit der Aluminiumpigmente durch Korrosionsphänomene entgegenzuwirken bzw. diese zu verhindern, ist es weiterhin bevorzugt, die Aluminiumpigmente durch eine Passivierung zu schützen.

Eine Passivierung der erfindungsgemäß zu verwendenden Aluminiumpigmente wird bewirkt, indem auf die Aluminiumpigmente, d.h. die plättchenförmigen Aluminiumpigmente und/oder den Aluminiumgrieß, eine geeignete korrosionshemmende Beschichtung aufgebracht wird. Hierdurch wird beispielsweise die Alkalienbeständigkeit der Aluminiumpigmente signifikant erhöht. Bevorzugt weisen mithin die plättchenförmigen Aluminiumpigmente und/oder der Aluminiumgrieß eine korrosionshemmende Beschichtung auf, wobei es besonders bevorzugt ist, dass sowohl die plättchenförmigen Aluminiumpigmente als auch der Aluminiumgrieß eine korrosionshemmende Beschichtung aufweisen.

Die korrosionshemmende Beschichtung der plättchenförmigen Aluminiumpigmente und des Aluminiumgrießes kann sich voneinander unterscheiden. Gemäß einer besonders bevorzugten Variante der Erfindung weisen die plättchenförmigen Aluminiumpigmente und der Aluminiumgrieß die gleiche korrosionshemmende Beschichtung auf, die auch als Nachbeschichtung bezeichnet wird.

Diese korrosionshemmende Beschichtung kann Titannitrid, Titanoxid, Siliziumoxid, Siliziumoxidhydrate, Siliziumhydroxid, Chromatierschichten, Ceroxid(en), Molybdat(en), Vanadat(en), Zirkoniumoxid, organische Polymere oder anorganisch/organische Mischschichten oder Kombinationen davon enthalten oder aus diesen Materialien bestehen. Solche korrosionshemmenden Beschichtungen sind beispielsweise in der DE 10 2010 025927 A1 offenbart, auf die diesbezüglich vollumfänglich Bezug genommen wird.

Unter Kombinationen verschiedener korrosionshemmender Schichten werden die oben genannten Schichten aus oder mit unterschiedlichen Materialien oder eine Mischung aus oder mit diesen Materialien in einer oder mehreren aufeinanderfolgenden Schichten verstanden.

Gemäß einer bevorzugten Ausführungsform enthält die korrosionshemmende Beschichtung Komponenten, die aus der Gruppe, die aus Siliziumoxid, vorzugsweise SiO₂, Siliziumoxidhydrat(en), Siliziumhydroxid, Chromatierschichten und Mischungen davon besteht, ausgewählt werden. Vorzugsweise besteht die korrosionshemmende Beschichtung aus einer oder mehreren der Komponenten, die in der vorstehenden Gruppe angegeben sind.

Derartige Beschichtungen können vorteilhaft die Langzeitstabilität der Aluminiumpigmente in den Polystyrol-Hartschaumplatten erhöhen. Hartschaumplatten sind öfter aufgrund der Verputzung unmittelbar an eine Mörtelschicht angebracht. Durch Diffusion von Wasser in die PS-Platte können Alkalien eingetragen werden, die die Aluminiumpigmente zersetzen können.

Gemäß einer äußerst bevorzugten Ausführungsform enthält die korrosionshemmende Beschichtung Komponenten, die aus der Gruppe, die aus Siliziumoxid, vorzugsweise SiO₂, Siliziumoxidhydrat(en), Siliziumhydroxid und Mischungen davon besteht, ausgewählt werden. Vorzugsweise besteht die korrosionshemmende Beschichtung aus einer oder mehreren der Komponenten, die in der vorstehenden Gruppe angegeben sind.

Die Siliziumoxidschichten, vorzugsweise SiO₂-Schichten, werden bevorzugt durch Sol-Gel-Verfahren gebildet. Hierbei werden Tetraalkoxysilane in alkoholischen Lösungen mit Wasser unter sauerer und/oder basischer Katalyse umgesetzt.

SiO₂ beschichtete plättchenförmige Aluminiumpigmente sind kommerziell unter dem Handelsnamen Hydrolan^{®} von der Fa. Eckart GmbH erhältlich.

Bei allen diesen Schichten handelt es sich um auf molekularer Ebene dreidimensional miteinander vernetzte Schichten, die besonders dichte Schichten ergeben und damit einen besonders wirksamen Korrosionsschutz bieten.

Die Schichtdicke wird so gewählt, dass die Korrosionsanfälligkeit des Aluminiums in den plättchenförmigen Aluminiumpigmenten und/oder dem Aluminiumgrieß effektiv verringert wird. Die mittlere Schichtdicke der korrosionshemmenden Beschichtung liegt vorzugsweise in einem Bereich von 2 nm bis 100 nm, bevorzugt von 5 bis 60 nm und besonders bevorzugt von 10 nm bis 40 nm.

Besteht die korrosionshemmende Beschichtung aus SiO₂, Siliziumoxidhydrat(en) oder Siliziumhydroxid, so liegt die Schichtdicke bevorzugt in einem Bereich von 3 bis 60 nm und besonders bevorzugt von 10 bis 40 nm.

Bei weiter bevorzugten Ausführungsformen können die SiO₂-Schichten an der Oberfläche mit organofunktionellen Verbindungen wie beispielsweise Silanen, Titanaten, Zirkonaten oder Aluminaten versehen sein.

Durch Verwendung von hydrophoben organofunktionellen Verbindungen wie beispielsweise Alkylsilanen, Arylsilanen und/oder fluorierten Alkylsilanen kann die korrosionshemmende Wirkung noch verstärkt werden.

Wenn die korrosionshemmende Beschichtung aus einer Chromatierschicht besteht oder eine solche umfasst, so liegt deren Schichtdicke bevorzugt in einem Bereich von 3 bis 50 nm und besonders bevorzugt von 10 bis 30 nm.

Chromatierschichten werden erhalten durch Behandlung von Aluminiumpigmenten mit Chromsäure in organischen Lösungsmitteln. Es bilden sich Mischschichten aus Chromoxid und dem Oxid des Aluminiumsubstrats aus, die eine sehr hohe Korrosionsbeständigkeit aufweisen.

Chromatierte plättchenförmige Aluminiumpigmente sind unter der Bezeichnung Hydrolux kommerziell von der Fa. Eckart GmbH erhältlich.

Besteht die korrosionshemmende Beschichtung aus einer organischen Beschichtung, so sind hierbei Polyacrylate, Polymethacrylate, Polyepoxide, Polyurethane und/oder Polyester bevorzugt.

Bevorzugt werden Polyacrylate und/oder Polymethacrylate. Diese werden gebildet, indem die plättchenförmigen Aluminiumpigmente und/oder der Aluminiumgrieß in einem organischen Lösemittel dispergiert, acrylat- bzw. methacrylathaltige Monomere hinzugegeben werden und abschließend bei erhöhter Temperatur das Monomerengemisch, vorzugsweise radikalisch, polymerisiert wird. Bevorzugte Polymerisationstemperaturen liegen in einem Bereich von 40 bis 120°C und besonders bevorzugt von 60 bis 80°C.

Als Lösemittel werden bevorzugt Testbenzin und/oder Isopropanol eingesetzt.

Bei weiteren besonders bevorzugten Ausführungsformen wird dem Reaktionsgemisch ein geeigneter Radikalstarter zugesetzt.

Als Monomere sind weiter bevorzugt Polyacrylate und/oder Polymethacrylate, die mehrfach funktionelle Acrylate und/oder Methacrylate als entsprechende Monomere aufweisen. Besonders bevorzugt zur Herstellung der Polyacrylate und/oder Polymethacrylate sind daher Monomere, die di-, tri- oder mehrfach funktionelle Acrylat- und/oder Methacrylatgruppen aufweisen.

Beispiele geeigneter difunktioneller Acrylate sind: Allylmethacrylat, Bisphenol-A-dimethacrylat, 1,3-Butandioldimethacrylat, 1,4-Butandioldimethacrylat, Ethylenglykoldimethacrylat, 1,6-Hexandioldiacrylat, 1,6-Hexandioldimethacrylat, Diethylenglykoldimethacrylat, Diurethandimethacrylat, Dipropylenglykoldiacrylat, 1,12-Dodecandioldimethacrylat, Ethylenglykoldimethacrylat, Methacrylsäureanhydrid, N,N-Methylen-bis-methacrylamid, Neopentylglykoldimethacrylat, Polyethylenglykoldimethacrylat, Polyethylenglykol-200-diacrylat, Polyethylenglykol-400-diacrylat, Polyethylenglykol-400-dimethacrylat, Tetraethylenglykoldiacrylat, Tetraethylenglykoldimethacrylat, Tricyclodecandimethanoldiacrylat, Tripropylenglykoldiacrylat, Triethylenglykoldimethacrylat oder Mischungen davon.

Als höherfunktionelle Acrylate können erfindungsgemäß z. B. Pentaerythritoltriacrylat, Trimethylolpropantriacrylat, Trimethylolpropantrimethacrylat, Tris-(2-hydroxyethyl)isocyanurattriacrylat, Pentaerythritoltetraacrylat, Dipentaerythritolpentaacrylat oder von Mischungen davon verwendet werden.

Besonders bevorzugt sind trifunktionelle Acrylate und/oder Methacrylate.

Als bei der vorliegenden Erfindung sehr geeignete Acrylate haben sich Dipentaerythritolpentaacrylat, Pentaerythritoltriacrylat, Pentaerythritoltetraacrylat, Trimethylolpropantriacrylat, Trimethylolpropantrimethacrylat, Tris-(2-hydroxyethyl)isocyanurattriacrylat, 1,6-Hexandioldimethacrylat oder deren Mischungen erwiesen.

Bei einer weiter bevorzugten Variante wird als korrosionshemmende Beschichtung eine anorganisch/organische Mischschicht verwendet. Hierbei handelt es sich um eine Beschichtung, bei der ein anorganisches Netzwerk, bevorzugt ein Oxid kovalent mit einem dieses anorganische Netzwerk penetrierendes organisches Polymer miteinander verbunden ist. Besonders bevorzugt wird eine Siliziumoxid-Beschichtung, insbesondere SiO₂-Beschichtung, verwendet, in die ein Acrylat- und/oder Methacrylatpolymer einpolymerisiert ist. Solche anorganisch/organischen Beschichtungen sind aus der WO 2007/017195 A2 bekannt, deren Inhalt hiermit unter Bezugnahme aufgenommen ist.

Die vorgenannten korosionshemmenden Beschichtungen, besonders bevorzugt Siliciumoxid/oxidhydrat und/oder Poly(meth)acrylatbeschichtungen, bewirken einen hervorragenden Schutz vor Korrosion durch alkalische Medien, wie beispielsweise Mörtel, Betone, etc..

Ein weiterer Vorteil dieser dreidimensional vernetzten Beschichtung besteht darin, selbst auch als IR-Absorber zu wirken und daher die gewünschte IR-Absorption und IR-Reflexion noch zu verstärken.

Bei einer weiteren vorteilhaften Ausführungsformen wird zur Verbesserung der Anbindung der korrosionshemmenden Beschichtung an die Pigmentoberfläche, vorzugsweise Metallpigmentoberfläche, eine Haftvermittlerschicht eingefügt.

So können beispielweise vor Aufbringung eines organischen Polymeren geeignete Silane auf die Pigmentoberfläche, vorzugsweise auf die Metalloberfläche des Aluminiumpigments, d.h. des plättchenförmigen Aluminiumpigments und/oder des Aluminiumgrießes, aufgebracht werden. Geeignete Silane sind solche, die polymerisierbare, zur Polymerschicht im Sinne einer chemischen Anbindung passende funktionelle Gruppen aufweisen, wie beispielsweise in der DE 4030727 A1 beschrieben. Bei diesen polymerierbaren Gruppen kann es sich beispielsweise um Acrylat-, Methaacrylat-, Vinyl-, und/oder Epoxidgruppen, etc. handeln. Des Weiteren weisen die Silane ein bis drei hydrolysierbare Gruppen, vorzugsweise Alkoxygruppen auf, die nach der Hydrolyse Silanolgruppen ausbilden und über die Silanolgruppen an die Partikeloberfläche anbinden. Bei den Alkoxygruppen handelt es sich vorzugsweise um Alkoxygruppen mit 1 bis 6 C-Atomen, vorzugsweise Methoxy- oder Ethoxygruppen.

Bei anderen bevorzugten Ausführungsformen werden die Aluminiumpigmente mit einem Aluminiumanteil von wenigstens 50 Gew.-% mit einer korrosionshemmenden Beschichtung, umfassend oder bestehend aus korrosionsschützenden Additiven, belegt. Derartige Additivschichten sind in der Regel nicht miteinander vernetzt, können, wenn die aus dem erfindungsgemäßen Polystyrol-Hartschaum hergestellten Hartschaumplatten nicht gegenüber zu aggressiven Bedingungen ausgesetzt werden, bereits einen ausreichenden Korrosionsschutz bieten.

Bevorzugte Beispiele für derartige Additive sind organische phosphorhaltige Verbindungen und insbesondere bevorzugt Phosphonsäuren oder deren Ester, organische Phosphorsäuren oder deren Ester, organische Phosphinsäuren oder deren Ester, wobei die organischen Phosphon-, Phosphor- oder Phosphinsäuren/ester, die bevorzugt mindestens einen organischen Rest mit 6 bis 30, weiter bevorzugt 12 bis 24, C-Atomen aufweisen.

Bevorzugt sind phosphorhaltige Verbindungen mit der allgemeinen Formel (I)

R¹R²P(O)(OR³) (I)

und/oder der allgemeinen Formel (II)

R¹P(O)(OR³)(OR⁴) (II),

wobei R¹ und R² unabhängig voneinander ein organischer Rest mit 6 bis 30 C-Atomen sind, und R³ und R⁴ unabhängig voneinander H oder Alkyl mit 1 bis 10 C-Atomen sind.

Verbindungen der allgemeinen Formel (I) sind organische Derivate von phosphiniger Säure, der sogenannten organischen phosphinigen Säure, bei der die organischen Reste R¹ und R² direkt an das Phosphoratom gebunden sind. Wenn der Rest R³ Alkyl mit 1 bis 10 C-Atomen ist, handelt es sich das organische Derivat eines Esters von phosphiniger Säure. Wenn R³ Wasserstoff ist, handelt es sich um ein organisches Derivat der freien phosphinigen Säure.

Verbindungen der allgemeinen Formel (II) sind organische Derivate von Phosphonsäure, der sogenannten organischen Phosphonsäure, bei der der organische Rest R¹ direkt an das Phosphoratom gebunden ist. Wenn die Reste R³ und R⁴ Alkyl mit 1 bis 10 C-Atomen sind, handelt es sich um ein organisches Derivat eines Diesters von Phosphonsäure. Wenn R³ Wasserstoff und R⁴ Alkyl mit 1 bis 10 C-Atomen ist, handelt es sich um ein organisches Derivat eines Monoesters von Phosphonsäure. Wenn R³ und R⁴ Wasserstoff sind, handelt es sich um ein organisches Derivat der freien Phosphonsäure.

Gemäß einer weiteren bevorzugten Variante können als korrosionsschützendes Additiv Verbindungen der Formel (IIIa) oder (IIIb) verwendet werden.

(R¹O)(R²O)P(O)(OR³) (IIIa)

oder

(R¹O)(R²O)(R⁴O)(R⁵O)P(OR³) (IIIa)

Verbindungen der allgemeinen Formel (IIIa) und (IIIb) sind organische Derivate von Phosphorsäure, sogenannte Phosphorsäureester, wobei die organischen Reste R¹, R², R³ und, sofern vorhanden, R⁴ und R⁵ über ein Sauerstoffatom an das Phosphoratom gebunden sind. Die Reste R¹ bis R⁵ sind vorzugsweise Alkyl und weisen unabhängig voneinander 1 bis 10 C-Atome auf. Wenn die Reste R¹ bis R⁵ Wasserstoff sind, handelt es sich um freie Phosphorsäure.

Besonders bevorzugte phosphorhaltige Additive sind Phosphonsäuren der Formeln (I) und/oder (II).

Die mittlere Schichtdicke der Additivbeschichtung liegt vorzugsweise in einem Bereich von 0,5 nm bis 10 nm, bevorzugt von 0,6 bis 5 nm und besonders von 0,7 nm bis 2 nm.

Der erfindungsgemäße Polystyrol-Hartschaum muss nicht als Polystyrolkomponente reines Polystyrol enthalten. Im Sinne der vorliegenden Erfindung werden unter Polystyrol auch Polystyrolcopolymer(e) verstanden. Polystyrolcopolymer werden durch Polymerisation von Styrolmonomer(en) und/oder Styrolcomonomer(en) erhalten. Das Polystyrol kann mithin Polystyrol, Polystyrolcopolymer oder eine Mischung aus Polystyrol und Polystyrolcopolymer sein.

Der erfindungsgemäße Polystyrolhartschaum weist bevorzugt eine Rohdichte aus einem Bereich von 10 bis 30 kg/m³ besonders bevorzugt von 10 bis 20 kg/m³ auf. Es hat sich gezeigt, dass die Einarbeitung der erfindungsgemäß zu verwendenden homogenen Mischung aus plättchenförmigen Aluminiumpigmenten und Aluminiumgrieß bei den vorstehend genannten Rohdichten einfach ist. Weiterhin wird bei diesen Rohdichten ein sehr gutes Wärmedämmvermögen bei möglichst geringem Materialeinsatz erhalten.

Die der vorliegenden Erfindung zugrundeliegende Aufgabe wird des Weiteren durch die eingangs bereits erwähnten erfindungsgemäßen Verfahren zur Herstellung von extrudiertem Aluminiumpigmente-haltigem Polystyrol-Hartschaum (XPS) und/oder von expandiertem Aluminiumpigmente-haltigem Polystyrol-Hartschaum (EPS) gelöst.

Das Verschäumen in Verfahrensschritt (c) bei der Herstellung von expandiertem Aluminiumpigmente-haltigem Polystyrol-Hartschaum (EPS) kann mittels organischer Lösemittel und/oder Wasserdampf durchgeführt werden. Aus Kostengründen und aufgrund erhöhter Umweltfreundlichkeit ist jedoch hierbei Wasserdampf besonders bevorzugt.

Überraschenderweise hat sich herausgestellt, dass bei dem erfindungsgemäßen Verfahren überraschenderweise eine Passivierung der Aluminiumpigmente, d.h. der plättchenförmigen Aluminiumpigmente und des Aluminiumgrießes, bei der Einarbeitung und nachfolgenden Einbettung in die weitgehend wasser- und sauerstofffreie Styrolpolymer- und/oder Styrolcopolymerschmelze in den Verfahrensschritten (a1) oder (a2) erfolgt, so dass bereits ein ausreichender Korrosionsschutz, insbesondere gegenüber Wasser oder Wasserdampf, erzeugt wird. Somit können bei der vorliegenden Erfindung auch gegenüber Korrosion ungeschützte Aluminiumpigmente verwendet werden, wobei die jeweils vorteilhafte IR-Aktivität erhalten bleiben.

Ohne an eine Theorie gebunden sein zu wollen, vermuten die Erfinder, dass während der Einarbeitung und nachfolgenden Einbettung das organische Polymer die Aluminiumpigmente umhüllt, wodurch eine oder eine zusätzliche korrosionshemmende Beschichtung auf die Aluminiumpigmente, d.h. die plättchenförmigen Aluminiumpigmente und den Aluminiumgrieß, aufgebracht wird. Dies hat zur Folge, dass die Aluminiumpigmente auch nach dem üblicherweise in Anwesenheit von Wasser durchgeführten Aufschäumen des Verfahrensschritts (b) bei der Herstellung von extrudiertem Aluminiumpigmente-haltigem Polystyrol-Hartschaum (XPS) bzw. nach dem Verschäumen mittels Wasserdampf gemäß Verfahrensschritt (c) bei der Herstellung von expandiertem Aluminiumpigmente-haltigem Polystyrol-Hartschaum (EPS) keine wesentliche bzw. keine Änderung der IR-Aktivität, d.h. des IR-Reflexionsvermögens und/oder der IR-Absorption, aufweisen.

Als Treibmittel wird gemäß einer weiteren Verfahrensvariante vorzugsweise Kohlendioxid oder Pentan verwendet.

Neben den vorzugsweise passivierten Aluminiumpigmenten, d.h. den mit einer korrosionshemmenden oder einer vor Korrosion schützenden Beschichtung versehenen plättchenförmigen Aluminiumpigmenten und/oder Aluminiumgrieß, können weitere Zusatz- und Hilfsstoffe zugegeben werden. Beispielsweise können die Zusatz- und Hilfsstoffe direkt der Styrol- und/oder Styrolcopolymerschmelze zugegeben werden oder mittels in Wasser löslicher, emulgierbarer oder suspendierbarer Beschichtungsmittel im Wasserkreislauf eines Unterwassergranulators auf die expandierbaren Styrolpolymerpartikel aufgebracht werden. Gebräuchliche Zusatz- und Hilfsstoffe sind Keimbildner, Weichmacher, Flammschutzmittel, Flammschutzsynergisten, Hydrophobierungsmittel, lösliche und unlösliche anorganische und/oder organische Farbstoffe und Pigmente, die sodann ebenfalls Bestandteil des Polystrol-Hartschaumes sind. Bevorzugt wird die Beschichtung im Wasserkreislauf des Unterwassergranulators für die Hydrophobierung verwendet.

Das Verschäumen des expandierbaren Styrol- und/oder Styrolcopolymerisatpartikel-Granulats unter Bereitstellung eines expandierten Polystyrol-Hartschaumes erfolgt in an sich bekannter Weise unter Verwendung von Wasserdampf, vorzugsweise nach dem Blockschäum-, Plattenschäum- oder Bandschäumverfahren.

Der expandierte Aluminiumpigment-haltige Polystyrol-Hartschaum (EPS) oder der extrudrierte Aluminiumpigment-haltige Polystyrol-Hartschaum (XPS) liegt vorzugsweise als Formkörper, vorzugsweise in Block- oder Plattenform, vor.

Bei einer anderen Ausführungsform der Erfindung kann der Polystyrol-Hartschaum sowohl die, vorzugsweise passivierten, Aluminiumpigmente, d.h. plättchenförmigen Aluminiumpigmente und Aluminiumgrieß, mit einem Aluminiumanteil von wenigstens 50 Gew.-% im metallischen Kern als auch zusätzlich weitere IR-aktive Pigmente enthalten. Diese weiteren Pigmente können Pigmente mit überwiegend IR-absorbierenden Eigenschaften, wie beispielsweise Graphit, Ruß und/oder organische Farbstoffe, oder solche mit überwiegend IR-reflektierenden Eigenschaften, wie Metalle und/oder Metalloxide, sein.

Vorzugsweise enthält der erfindungsgemäße Polystyrolhartschaum jedoch neben den Aluminiumpigmenten, d.h. den plättchenförmigen Aluminiumpigmenten und dem Aluminiumgrieß, keine weiteren Pigmente, um etwaige Inhomogenitäten, die aus unterschiedlichen Materialeigenschaften, insbesondere der Dichte und/oder Oberflächeneigenschaften, resultieren können, zu vermeiden.

Der erfindungsgemäße Polystyrol-Hartschaum kann für die Dämmung in Gewerken, insbesondere für Fassaden, Dächern und Böden, verwendet werden.

Die Erfindung wird anhand der nachstehenden Beispiele und Figur näher veranschaulicht, ohne dabei auf diese beschränkt zu sein.

### Beispiele:

In einem Einschneckenextruder mit einer nachgeschalteten Unterwassergranulation wurde ein Polystyrolgranulat aus Empera 153F mit einer Schmelzvolumenrate MVR (MVR: Melt volume-flow rate) von etwa 7,5 cm³/10 min gemäß ISO 1133 (Hersteller INEOS NOVA) unter Zugabe von 4 Gew.-%, bezogen auf das Polystyrolgranulat, Pentan als Treibmittel aufgeschmolzen, so dass die Polystyrolschmelze eine Temperatur von 160°C aufwies.

Der in sämtlichen Beispielen verwendete Aluminiumgrieß war sphärisch und wies eine Partikelgrößenverteilung von d_{10,Grieß} = 0,4 µm, d_{50,Grieß} = 1,5 µm und d_{90,grieß} = 3 µm, gemessen mit dem Accusizer 780 APS, sowie einen Gehalt an Aluminium von 99,9 Gew.-%, bezogen auf das Gesamtmetallgewicht, auf und ist bei der Firma Eckart GmbH, Hartenstein, Deutschland, unter der Bezeichnung "WA 23" erhältlich.

Das in sämtlichen Beispielen verwendete plättchenförmige Aluminiumpigment wies einen Formfaktor von 60 und eine Partikelgrößenverteilung von d_{10,flake} =1,6 µm, d_{50,flake} = 4,4 µm und d_{90,flake} = 12,2 µm, gemessen mit dem Accusizer 780 APS, sowie einen Gehalt an Aluminium von 99,8 Gew.-%, bezogen auf das Gesamtmetallgewicht, auf und ist bei der Firma Eckart GmbH unter der Bezeichnung "PC 150" erhältlich. Zur Herstellung der Mischungen wurden die entsprechenden Mengen der plättchenförmigen Aluminiumpigmenten und des Aluminiumgrießes gemischt, mit medizinischem Weißöl angepastet (jeweils ca. 17 Gew.-% Lösemittelanteil, bezogen auf das Gesamtgewicht der Paste) und durch Rühren homogenisiert. Es wurden für die Vergleichs- und Ausführungsbeispiele 3 Gew.-% bzw. 6% Gew.-% der angepasteten Mischung zugegeben, was einem Pigmentanteil von etwa 2,5 Gew.-% bzw. etwa 5 Gew.-% entspricht.

Die treibmittel- und aluminiumpigmenthaltige Styrolpolymerschmelze wurde anschließend auf eine Temperatur von etwa 140 °C abgekühlt und durch eine auf 160 °C, d. h. auf eine oberhalb der Temperatur der Polystyrolschmelze beheizte Düsenplatte mit 0,4 mm Bohrungen in ein Wasserbad bei 3 bar granuliert. Die erhaltenen aluminiumpigmentierten Polystyrolgranulate besaßen einen Granulatdurchmesser von etwa 0,75 mm.

Als Vergleichbeispiele wurden Aluminiumgrieß-haltige Styrolpolymerisatpartikel (Vergleichsbeispiel 1) bzw. plättchenförmige Aluminiumpigment-haltige Styrolpolymerisatpartikel (Vergleichsbeispiel 2) auf die vorstehend beschriebene Weise hergestellt. Beim Vergleichsbeispiel 1 enthielten die Styrolpolymerisatpartikel keine plättchenförmigen Aluminiumpigmente und beim Vergleichsbeispiel 2 keinen Aluminiumgrieß.

Für ein weiteres Vergleichsbeispiel wurde jeweils eine homogene Mischung aus 65 Gew.-% Aluminiumgrieß-haltige Styrolpolymerisatpartikeln und 35 Gew.-% plättchenförmige Aluminiumpigmente-haltige Styrolpolymerisatpartikeln erzeugt (Vergleichsbeispiel 3). Die Aluminiumgrieß-haltigen Styrolpolymerisatpartikel enthielten dabei keine plättchenförmigen Aluminiumpigmente und die plättchenförmigen Aluminiumpigmente-haltigen Styrolpolymerisatpartikel enthielten dabei keinen Aluminiumgrieß. Der Gehalt des Aluminiumgrieß einerseits bzw. des plättchenförmigen Aluminiumpigmentes andererseits betrug in diesen Styrolpolymerisatpartikeln des Vergleichsbeispiels jeweils 2,5 Gew.-%, jeweils bezogen auf das Gewicht der jeweiligen Aluminiumpigment-haltigen Styrolpartikel.

Für das erfindungsgemäße Ausführungsbeispiel 1 wurden Styrolpolymerisatpartikel, enthaltend eine homogene Mischung aus 35 Gew.-% plättchenförmigen Aluminiumpigmenten und 65 Gew.-% Aluminiumgrieß, hergestellt. Bei Ausführungsbeispiel 1 betrug die Gesamtkonzentration der Aluminiumpigmente 2,5 Gew.-%, bezogen auf das Gesamtgewicht des Polystyrolhartschaums. Bei Ausführungsbeispiel 2 wurde die doppelte Konzentration an Aluminiumpigmenten, d.h. 5 Gew.-%, bezogen auf das Gesamtgewicht des Polystyrolhartschaums, eingesetzt.

Die erfindungsgemäß zu verwendenden Polystyrolpartikel gemäß den Ausführungsbeispielen 1 und 2 und die Polystyrolpartikel gemäß den Vergleichsbeispielen wurden dann in einem Blockschäumverfahren mit Wasserdampf bei einer Temperatur von 110 °C während 3 min zu Blöcken verschäumt, aus denen Platten mit einer Dimension von 1000 mm x 500 mm x 50 mm geschnitten wurden. Die Platten wurden für 48 Stunden im Trockenofen bei 60 Celsius getrocknet, um einen möglichen Einfluss des Treibmittels auf die Wärmeleitfähigkeitsmessung zu minimieren. An diesen Platten wurden die Rohdichten bestimmt und Messungen der Wärmeleitfähigkeit nach den Vorgaben der DIN EN 12 667 vorgenommen, wobei der Messwert der Wärmeleitfähigkeit der Mittelwert aus 5 Messungen ist.

Die Daten und die Ergebnisse der Messungen nach DIN EN 12 667 sind in folgender Tabelle 1 zusammengestellt:

**Tabelle 1**

| | Grießanteil in [Gew.-%] | plättchenförm ige Pigmente in [Gew.-%] | Aluminiumpigmentgehalt in [Gew.-%] | Rohdichte [kg/m³] | Messwert Wärmeleitfähigkeit [mW/mK] |
|---|---|---|---|---|---|
| VB 1 | 100 | 0 | 2,5 | 10,5 | 39,3 |
| | | | | 14,1 | 35,3 |
| | | | | 18,3 | 33,1 |
| | | | | 22,0 | 31,9 |
| | | | | 25,3 | 32,1 |
| VB 2 | 0 | 100 | 2,5 | 12,3 | 32,5 |
| | | | | 14,7 | 31,4 |
| | | | | 17,7 | 30,8 |
| | | | | 19,8 | 30,3 |
| | | | | 21,4 | 30,2 |
| VB 3 | (100) 65 Gew.-% Styrolpolymerisatpartikel | (100) 35 Gew.-% Styrolpolymerisatpartikel | 2,5 | 11,6 | 37,4 |
| | | | | 14,6 | 34,1 |
| | | | | 17,4 | 32,9 |
| | | | | 20,3 | 31,5 |
| | | | | 25,6 | 30,8 |
| AB 1 | 65 | 35 | 2,5 | 10,9 | 34,4 |
| | | | | 14,2 | 32,1 |
| | | | | 17,9 | 30,6 |
| | | | | 20,0 | 30,6 |
| | | | | 25,3 | 30,1 |
| AB 2 | 65 | 35 | 5 | 11,3 | 32,1 |
| | | | | 14,9 | 30,3 |
| | | | | 20,0 | 29,4 |
| | | | | 21,0 | 29,6 |
| | | | | 26,3 | 29,2 |

| | | | | | |
|---|---|---|---|---|---|
| VB = Vergleichsbeispiel AB = Ausführungsbeispiel Der Grießanteil in [Gew.-%] bezieht sich auf den Gewichtsanteil von Aluminiumgrieß in den verwendeten Aluminiumpartikel. Der Anteil an plättchenförmigen Pigmente in [Gew.-%] bezieht sich auf den Gewichtsanteil von plättchenförmigen Aluminiumpigmenten in den verwendeten Aluminiumpartikel. Der Aluminiumpigmentgehalt in [Gew.-%] bezieht sich auf den Anteil der verwendeten Aluminiumpartikel, d. h. Aluminiumgrieß und/oder plättchenförmige Aluminiumpigmente, in dem Polystyrol-Hartschaum. Die Rohdichte in [kg/m³] bezeichnet die Rohdichte des eingesetzten Polystyrol-Hartschaumes mit Zusatz von Aluminiumpartikeln. | | | | | |

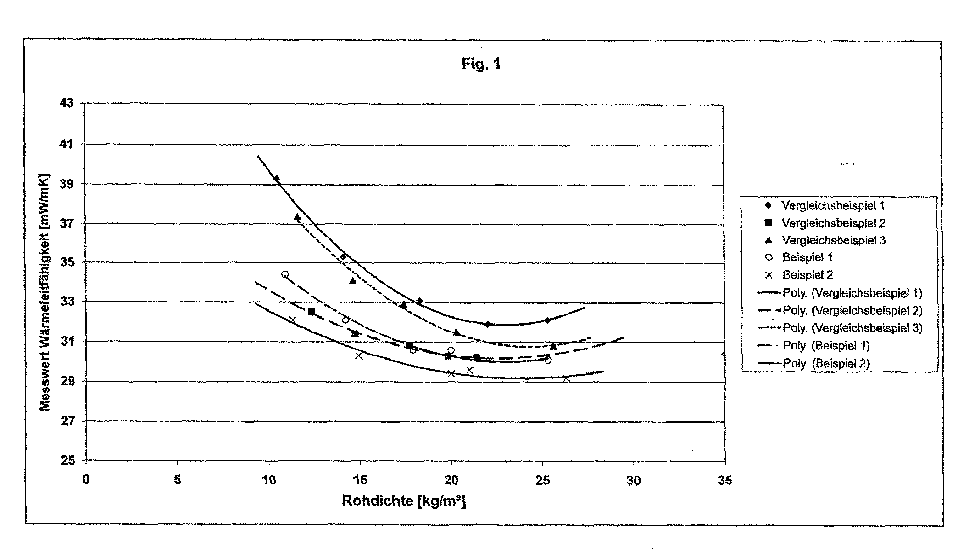

Fig. 1 zeigt eine polynomische Regression der Wärmeleitfähigkeit in Abhängigkeit von der Rohdichte des verwendeten Polystyrol-Hartschaumes auf Basis der Daten der Tabelle 1.

Die in Fig. 1 dargestellten Ergebnisse zeigen den Effekt des synergistischen Zusammenwirkens der erfindungsgemäßen Mischung von plättchenförmigen Aluminiumpigmenten und Aluminiumgrieß.

Gegenüber dem Vergleichsbeispiel 1, bei dem der Polystyrol-Hartschaum als Aluminiumpartikel nur Aluminiumplättchen, d.h. keinen Aluminiumgrieß, enthält, ist oberhalb einer Rohdichte von etwa 18 bis 20 g/l, verglichen mit den erfindungsgemäßen Ausführungsbeispielen 1 und 2 mit einer homogenen Aluminiumpigmentmischung aus 65 Gew.-% Aluminiumgrieß und 35 Gew.-% Aluminiumplättchen kein praktischer Unterschied in der Wärmeleitfähigkeit feststellbar. Mithin erlaubt die vorliegende Erfindung bei einem verminderten Anteil an kostenintensiven plättchenförmigen Aluminiumeffektpigmenten die Bereitstellung eines Wärmedämmmaterials mit gleichen Wärmeisolationseigenschaften.

Aus dem Vergleich der Ausführungsbeispiele 1 und 2 ergibt sich, dass durch die Verdopplung des Aluminiumpigmentgehalt von 2,5 Gew.-% auf 5 Gew.-%, das bei identischem Mischungsverhältnis von Aluminiumgrieß zu plättchenförmigen Aluminiumpigmenten von 65:35 (w/w) einem absoluten Gehalt von plättchenförmigen Aluminiumpigmenten von etwa 1,76 Gew.-% beim Ausführungsbeispiel 2 entspricht, EPS-Hartschaumdämmstoffe herstellbar sind, die bei einer Rohdichte im Bereich von etwa 20 g/l bis zu etwa 35 g/l eine Wärmeleitfähigkeit nach DIN EN 12 667 im Bereich von 0,030 W/mK und kleiner als 0,030 W/mK aufweisen.

Die Erfindung ermöglicht ferner die Bereitstellung von EPS-Hartschaumdämmstoffen, die bei einer Rohdichte im Bereich von etwa 10 g/l bis zu etwa 18 g/l und bei Verwendung einer homogenen Mischung von 65 Gew.-% Grieß und 35 Gew.-% Aluminiumplättchen eine Wärmeleitfähigkeit aufweisen, die der von EPS Hartschaumdämmstoffe mit gleicher Rohdichte und der ausschließlichen Verwendung von Aluminiumplättchen entspricht.

Aus dem Vergleich der Ausführungsbeispiele 1 und 2 mit dem Vergleichsbeispiel 2 (100% Aluminiumplättchen) ergibt sich aus einem in guter Näherung linearen Zusammenhang zwischen dem Aluminiumpigmentgehalt und der Wärmeleitfähigkeit, dass die schlechtere Wärmeleitfähigkeit der Mischung aus plättchenförmigem Aluminiumpigment und von Aluminiumgrieß bei praktisch bedeutsamen Rohdichten in einem Bereich von 10-18 g/l durch eine die Wirtschaftlichkeit nicht beeinträchtigende Erhöhung des Aluminiumpigmentgehalts bei gleichem Mischungsverhältnis im EPS-Hartschaum um 20 % kompensiert werden kann. Konkret bedeutet dies, dass vergleichbare Werte für die Wärmeleitfähigkeit mit einem Aluminiumpigmentgehalt von bis zu 3,0 Gew.-%, bezogen auf das Gesamtgewicht des Aluminiumpigment-haltigen Polystyrols, erreicht werden, wobei der Anteil der im Vergleich wesentlich teureren Aluminiumplättchen mit maximal 1,0 Gew.-% erheblich unter dem plättchenförmigen Aluminiumpigmentgehalt von 2,5 Gew.%, bezogen auf das Gesamtgewicht des Aluminiumpigment-haltigen Polystyrols, bei dem Vergleichbeispiel 2 liegt.

Der unmittelbare Vergleich des Ausführungsbeispiels 1 mit dem Vergleichsbeispiel 3 belegt, dass der homogenen Verteilung des Aluminiumpigments, d. h. der Homogenität der zuzugebenden Mischung aus plättchenförmigem Aluminiumpigment und von Aluminiumgrieß, im Polystyrol-Hartschaum, d. h. dem Einbringen als Mischung eine erhebliche Bedeutung für die synergistische Wirkung der erfindungsgemäß zu verwendenden Mischung aus Aluminiumgrieß und Aluminiumplättchen zukommt. Die Mischung aus zwei Styrolpartikeln, die entweder plättchenförmiges Aluminiumpigment oder Aluminiumgrieß enthielten, ergab signifikant schlechtere Messwerte bei der Wärmeleitfähigkeit.

## Patentansprüche

1. Polystyrol-Hartschaum enthaltend Aluminiumpigmente mit einem metallischen Kern,
**dadurch gekennzeichnet,**
**dass** der metallische Kern der Aluminiumpigmente einen elementaren Aluminiumanteil von wenigstens 50 Gew.-%, bezogen auf das Gewicht des metallischen Kerns, aufweist, wobei die Aluminiumpigmente in Form von Plättchen, deren d_{50,flakes}-Wert zwischen 1 und 25 µm liegt, und in Form von Aluminiumgrieß mit einem mittleren Durchmesser d_{50,Grieß} zwischen 0,5 und 25 µm vorliegen, wobei der Anteil des Aluminiumgrießes an dem Gesamtgewicht der Aluminiumpigmente in einem Bereich von 60 Gew.-% bis 90 Gew.-% und der Anteil der Aluminiumplättchen an der Gesamtgewicht der Aluminiumpigmente in einem Bereich von 40 Gew.-% bis 10 Gew.-% liegt, und die Aluminiumpigmente als homogene Mischung im Polystyrol-Hartschaum vorliegen.

2. Polystyrol-Hartschaum gemäß Anspruch 1,
**dadurch gekennzeichnet,**
**dass** der Aluminiumgrieß einen mittleren Durchmesser d_{50,Grieß} aus einem Bereich von 0,5 bis 10 µm aufweist.

3. Polystyrol-Hartschaum gemäß Anspruch 1 oder 2,
**dadurch gekennzeichnet,**
**dass** der Anteil des Aluminiumgrießes an dem Gesamtgewicht der Aluminiumpigmente in einem Bereich von 60 Gew.-% bis 80 Gew.-% und der Anteil der Aluminiumplättchen an dem Gesamtgewicht der Aluminiumpigmente in einem Bereich von 40 Gew.-% bis 20 Gew.-% liegt.

4. Polystyrol-Hartschaum gemäß einem der vorstehenden Ansprüche,
**dadurch gekennzeichnet,**
**dass** der Anteil der Aluminiumpigmente in einem Bereich von 0,1 bis 10 Gew.-%, bezogen auf das Gesamtgewicht des Polystyrol-Hartschaumes, beträgt.

5. Polystyrol-Hartschaum gemäß einem der vorstehenden Ansprüche,
**dadurch gekennzeichnet,**
**dass** der Polystyrol-Hartschaum ein expandierter Polystyrol-Hartschaum (EPS) oder ein extrudierter Polystyrol-Hartschaum (XPS) ist.

6. Polystyrol-Hartschaum gemäß einem der vorstehenden Ansprüche,
**dadurch gekennzeichnet,**
**dass** der Aluminiumgrieß einen mittleren Durchmesser d_{50,Grieß} aus einem Bereich von über 0,8 bis 6 µm aufweist.

7. Polystyrol-Hartschaum gemäß einem der vorstehenden Ansprüche,
**dadurch gekennzeichnet,**
**dass** die plättchenförmigen Aluminiumpigmente und/oder der Aluminiumgrieß eine korrosionshemmende Beschichtung aufweisen.

8. Polystyrol-Hartschaum gemäß einem der vorstehenden Ansprüche,
**dadurch gekennzeichnet,**
**dass** der Polystyrol-Hartschaum neben den Aluminiumpigmenten mit einem Anteil an elementarem Aluminium von wenigstens 50 Gew.-% ein oder mehrere weitere IR-aktive Pigmente enthält.

9. Polystyrol-Hartschaum gemäß einem der vorstehenden Ansprüche,
**dadurch gekennzeichnet,**
**dass** der Polystyrol-Hartschaum eine Rohdichte aus einem Bereich von 10 bis 30 kg/m³ aufweist.

10. Verfahren zum Herstellen von extrudiertem Polystyrol-Hartschaum (XPS) nach einem der Ansprüche 1 bis 9,
**dadurch gekennzeichnet,**
**dass** das Verfahren folgende Schritte umfasst:
(a1) Einbringen von Aluminiumpigmenten mit einem metallischen Kern, der einen Anteil an elementarem Aluminium von wenigstens 50 Gew.-%, bezogen auf das Gewicht des metallischen Kerns, aufweist, wobei die Aluminiumpigmente in Form von Plättchen, deren d_{50,flakes}-Wert in einem Bereich von 1 bis 25 µm liegt, und in Form von Aluminiumgrieß mit einem mittleren Durchmesser d_{50,Grieß} in einem Bereich von 0,5 bis 25 µm vorliegen, wobei der Anteil des Aluminiumgrießes an dem Gesamtgewicht der Aluminiumpigmente in einem Bereich von 60 Gew.-% bis 90 Gew.-% und der Anteil der Aluminiumplättchen an dem Gesamtgewicht der Aluminumpigmente in einem Bereich von 40 Gew.-% bis 10 Gew.-% liegt, und die Aluminiumpigmente als homogene Mischung vorliegen, in eine Treibmittel-haltige Styrolpolymer- und/oder Styrolcopolymerschmelze,
oder
(a2) Einbringen von Aluminiumpigmenten mit einem metallischen Kern, der einen Anteil an elementarem Aluminium von wenigstens 50 Gew.-%, bezogen auf das Gewicht des metallischen Kerns, aufweist, wobei die Aluminiumpigmente in Form von Plättchen, deren d_{50,flakes}-Wert in einem Bereich von 1 bis 25 µm liegt, und in Form von Aluminiumgrieß d_{50,Grieß} mit einem mittleren Durchmesser in einem Bereich von 0,5 bis 25 µm vorliegen, wobei der Anteil des Aluminiumgrießes an dem Gesamtgewicht der Aluminiumpigmente in einem Bereich von 60 Gew.-% bis 90 Gew.-% und der Anteil der Aluminiumplättchen an dem Gesamtgewicht der Aluminumpigmente in einem Bereich von 40 Gew.-% bis 10 Gew.-% liegt und die Aluminiumpigmente als homogene Mischung in Styrolpolymer und/oder Styrolcopolymer vorliegen, und nachfolgendem Schmelzen des Aluminiumpigmente-haltigen Styrolpolymers und/oder Styrolcopolymers in Gegenwart oder unter nachfolgender Zugabe von Treibmittel,
(b) Extrudieren und Aufschäumen der Schmelze unter Erhalt von extrudiertem Aluminiumpigmente-haltigem Polystyrol-Hartschaum.

11. Verfahren zum Herstellen von expandiertem Polystyrol-Hartschaum (EPS) nach einem der Ansprüche 1 bis 9,
**dadurch gekennzeichnet,**
**dass** das Verfahren folgende Schritte umfasst:
(a1) Einbringen von Aluminiumpigmenten mit einem metallischen Kern, der einen Anteil an elementarem Aluminium von wenigstens 50 Gew.-%, bezogen auf das Gewicht des metallischen Kerns, aufweist, wobei die Aluminiumpigmente in Form von Plättchen, deren d_{50,flakes}-Wert in einem Bereich von 1 bis 25 µm liegt, und in Form von Aluminiumgrieß mit einem mittleren Durchmesser d_{50,Grieß} in einem Bereich von 0,5 bis 25 µm vorliegen, wobei der Anteil des Aluminiumgrießes an dem Gesamtgewicht der Aluminiumpigmente in einem Bereich von 60 Gew.-% bis 90 Gew.-% und der Anteil der Aluminiumplättchen an dem Gesamtgewicht der Aluminumpigmente in einem Bereich von 40 Gew.-% bis 10 Gew.-% liegt, und die Aluminiumpigmente als homogene Mischung vorliegen, in eine Treibmittel-haltige Styrolpolymer- und/oder Styrolcopolymerschmelze,
oder
(a2) Einbringen von Aluminiumpigmenten mit einem metallischen Kern, der einen Anteil an elementarem Aluminium von wenigstens 50 Gew.-%, bezogen auf das Gewicht des metallischen Kerns, aufweist, wobei die Aluminiumpigmente in Form von Plättchen, deren d_{50,flakes}-Wert in einem Bereich von 1 bis 25 µm liegt, und in Form von Aluminiumgrieß mit einem mittleren Durchmesser d_{50,Grieß} in einem Bereich von 0,5 bis 25 µm vorliegen, wobei der Anteil des Aluminiumgrießes an dem Gesamtgewicht der Aluminiumpigmente in einem Bereich von 60 Gew.-% bis 90 Gew.-% und der Anteil der Aluminiumplättchen an dem Gesamtgewicht der Aluminumpigmente in einem Bereich von 40 Gew.-% bis 10 Gew.-% liegt und die Aluminiumpigmente als homogene Mischung in Styrolpolymer und/oder Styrolcopolymer vorliegen, und nachfolgendem Schmelzen des Aluminiumpigmente-haltigen Styrolpolymers und/oder Styrolcopolymers in Gegenwart oder unter nachfolgender Zugabe von Treibmittel,
(b) Extrudieren der Schmelze unter Erhalt von Aluminiumpigmente-haltigen Styrolpolymer- und/oder Styrolcopolymerpartikeln,
(c) Verschäumen der in Schritt (b) erhaltenen Styrolpolymer- und/oder Styrolcopolymerpartikel unter Erhalt von expandiertem Aluminiumpigmente-haltigem Polystyrol-Hartschaum.

12. Verfahren nach Anspruch 10 oder 11,
**dadurch gekennzeichnet,**
**dass** das Treibmittel Kohlendioxid oder Pentan ist.

13. Verfahren nach einem der Ansprüche 10 bis 12,
**dadurch gekennzeichnet,**
**dass** der Aluminiumgrieß mit einem mittleren Durchmesser d_{50,Grieß} aus einem Bereich von 0,5 bis 10 µm vorliegt.

14. Verfahren nach einem der Ansprüche 10 bis 13,
**dadurch gekennzeichnet,**
**dass** die plättchenförmigen Aluminiumpigmente und/oder der Aluminiumgrieß vor dem Einbringen in Schritt (a1) oder (a2) mit einer korrosionshemmenden Beschichtung versehen werden.

15. Verwendung des Polystyrol-Hartschaums nach einem der Ansprüche 1 bis 9 als Dämmmaterial, insbesondere für Fassaden, Dächer oder Böden.

16. Verwendung von Aluminiumpigmenten mit einem metallischen Kern, der einen Anteil an elementarem Aluminium von wenigstens 50 Gew.-%, bezogen auf das Gewicht des metallischen Kerns aufweist, wobei die Aluminiumpigmente in Form von Plättchen, deren d_{50,flakes}-Wert zwischen 1 und 25 µm liegt, und in Form von Aluminiumgrieß mit einem mittleren Durchmesser d_{50,Grieß} in einem Bereich von 0,5 bis 25 µm, insbesondere von 0,5 bis 10 µm, vorliegen, wobei der Anteil des Aluminiumgrießes an dem Gesamtgewicht der Aluminiumpigmente in einem Bereich von 60 Gew.-% bis 90 Gew.-% liegt und die Aluminiumpigmente als homogene Mischung vorliegen, als athermanes Material in Polystyrol-Hartschaum.
